# FASCICULE DE BREVET EUROPEEN

(11) **EP 1 892 401 B1**
(45) Date de publication et mention de la délivrance du brevet: **20.01.2010**
(21) Numéro de dépôt: 07301262.7
(22) Date de dépôt: 23.07.2007
(51) Int. Cl.: F02D 41/04, F02D 41/34

(54) **Procédé de commande d'injection de carburant pour moteur à combustion interne à injection indirecte et allumage commande**
Steuereinrichtung zum Einspritzen von Brennstoff für eine Brennkraftmachine mit indirekter Einspritzung und Fremdzündung
Control method for the injection of fuel for an internal combustion engine with indirect injection and spark ignition

(30) Priorité: 17.08.2006 FR 0653391
(43) Date de publication de la demande: 27.02.2008
(73) Titulaire: PEUGEOT CITROËN AUTOMOBILES SA, 78140 Vélizy Villacoublay (FR)
(72) Inventeur: Gourves, Frédéric, 95800 Cergy Le Haut (FR)
(74) Mandataire: Allain, Laurent

(56) Documents cités:
- EP-A2- 0 691 463
- DE-A1- 10 324 032
- US-A1- 2003 163 243

## Description

La présente invention concerne un procédé de commande d'injection de carburant pour moteur à combustion interne à injection indirecte et allumage commandé.

Elle s'adresse en particulier à des moteurs à essence comprenant un dispositif d'injection indirecte multipoint.

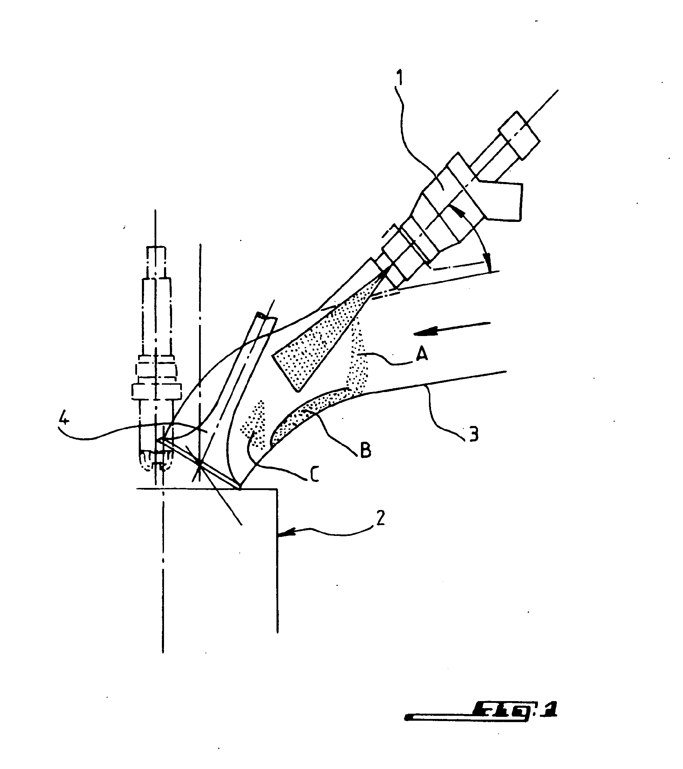

Un dispositif d'injection indirecte d'essence est représenté en figure 1 et comprend, pour chaque cylindre du moteur, un injecteur 1 associé au conduit d'admission 3 du cylindre 2 et dont l'extrémité d'injection débouche dans le conduit 3 en amont de la soupape d'admission correspondante 4. L'orientation de l'injecteur 1 à l'intérieur du conduit d'admission 3 fait qu'une grande partie de l'essence injectée frappe les parois internes du conduit d'admission 3 et la surface extérieure de la soupape d'admission 4 avant de pénétrer dans la chambre de combustion en position d'ouverture de cette soupape.

En injection indirecte, une partie de l'essence injectée projetée sur les parois du conduit d'admission 3 comme indiqué en A se dépose sur ces parois sous forme d'un film liquide d'essence comme schématisé en B.

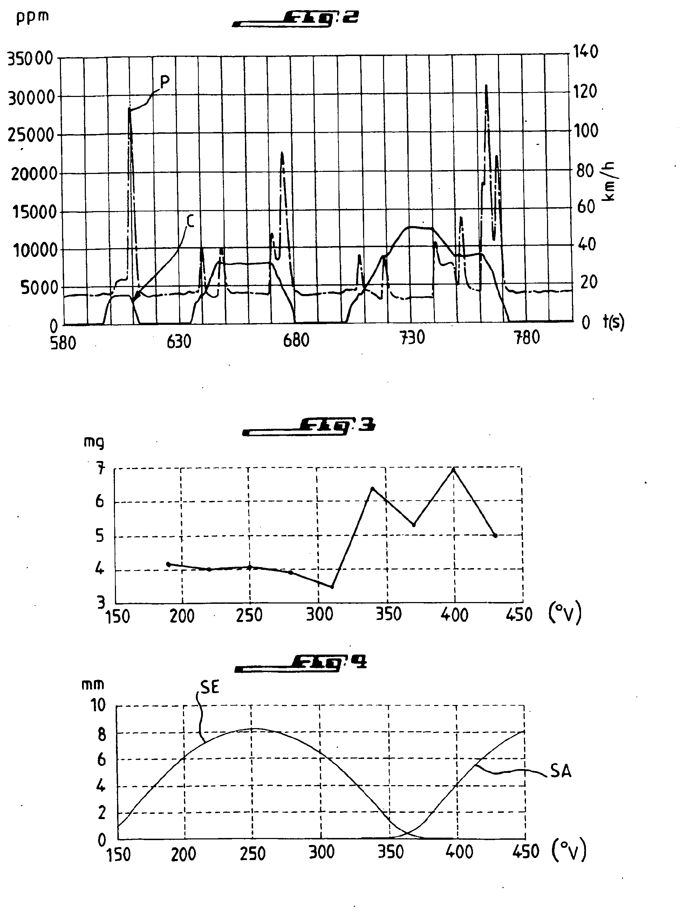

En début de coupure de l'injection d'essence, le film liquide présent sur le conduit d'admission s'évaporant comme indiqué en C, il pénètre dans la chambre de combustion et ne brûle pas. Il se crée alors un pic d'hydrocarbures imbrûlés HC en sortie du moteur et en amont du catalyseur comme représenté en figure 2 qui montre un pic P de HC à la coupure d'injection C. Ce pic d'hydrocarbures imbrûlés HC est traité par le catalyseur lorsque ce dernier est amorcé (chaud), mais il créé une élévation de température exothermique du pain catalytique. Une telle élévation de température produit un vieillissement plus rapide du catalyseur. De plus, lorsque le catalyseur commence à devenir ancien, le pic d'hydrocarbures imbrûlés (HC) présent en sortie du moteur n'est pas traité complètement par ce catalyseur et la coupure d'injection d'essence a alors un impact sur les émissions polluantes.

Pour réduire le pic d'hydrocarbures imbrûlés lors de la coupure d'injection d'essence, il est nécessaire de diminuer la quantité d'essence présente sur les parois du conduit d'admission avant cette coupure.

A cet effet, deux possibilités existent:
- optimiser l'injecteur en choisissant un angle d'inclinaison de celui-ci relativement au conduit d'admission comme représenté en figure 1, ou en utilisant un injecteur à pulvérisation améliorée;
- optimiser le contrôle du moteur par un calculateur électronique suivant une stratégie de commande de l'injection d'essence avant la coupure de cette injection.

L'invention s'inscrit dans cette seconde possibilité par laquelle une stratégie de commande de l'injection a été identifiée, comme on le verra ultérieurement, pour diminuer la quantité d'essence présente sur les parois du conduit d'admission avant la coupure de l'injection et de l'allumage.

Cette stratégie a été élaborée à partir des constatations suivantes.

Des essais de mesure de concentration d'hydrocarbures imbrûlés à l'aide d'un analyseur rapide de concentration du type FFID (Détecteur à Ionisation de Flamme) en sortie des soupapes d'échappement ont permis de quantifier la masse de film liquide présent avant la coupure d'injection.

Il apparaît que le phasage de l'injection d'essence a un impact important sur la masse du film liquide ou fluide avant la coupure d'injection comme cela ressort des figures 3 et 4, où la figure 3 représente l'évolution de la masse de film fluide pour différents débits d'injection en fonction de l'angle de rotation du vilebrequin du moteur et la figure 4 représente la levée des soupapes d'échappement SE et d'admission SA en fonction de l'angle de rotation de ce vilebrequin. En effet, lorsque l'injection a lieu avec la soupape d'admission SA ouverte, la masse de film fluide est nettement plus importante et cette tendance s'explique par le fait que le temps d'évaporation du film fluide avant la fermeture de la soupape d'admission est plus faible.

Il apparaît donc des figures 3 et 4, qu'il est intéressant, dans le but d'avoir une faible quantité d'hydrocarbures imbrûlés en début de coupure de l'injection, de commander l'injection lors de la phase d'échappement avant que la soupape d'admission s'ouvre. Ce réglage est aujourd'hui utilisé sur les moteurs à essence à injection indirecte et comme le montre la figure 2, le pic d'hydrocarbures imbrûlés dans ce cas est important.

La présente invention a pour but de proposer une nouvelle stratégie permettant d'optimiser davantage la coupure d'injection d'essence afin de diminuer la quantité d'hydrocarbures imbrûlés en début de la coupure d'injection.

A cet effet, selon l'invention, le procédé de commande d'injection du carburant pour moteur à combustion interne à injection indirecte et allumage commandé comprenant au moins un cylindre, un injecteur associé au conduit d'admission du cylindre et piloté lors du cycle de fonctionnement du moteur de manière à injecter du carburant, tel que de l'essence, dans le conduit d'admission en amont de la soupape d'admission ouverte du cylindre avant de pénétrer dans la chambre de combustion du cylindre, est caractérisé en ce qu'il consiste à piloter l'injecteur en décalant le phasage d'injection de carburant dans le conduit d'admission au-delà de l'instant de fermeture de la soupape d'admission avant coupure de l'injection et simultanément diminuer le temps d'injection de carburant pendant ce phasage prolongé d'injection jusqu'à la coupure de l'injection, afin de diminuer la quantité de film fluide de carburant présent sur les parois du conduit d'admission.

La période de décalage du phasage d'injection jusqu'à la coupure de l'injecteur est paramétrable en nombre de cycles de fonctionnement du moteur.

L'invention vise également un moteur à combustion interne à injection indirecte et allumage commandé comprenant plusieurs cylindres, des conduits d'admission associés chacun à un cylindre avec lequel les conduits d'admission communiquent par l'intermédiaire d'une soupape d'admission du cylindre, des injecteurs associés chacun à un conduit d'admission et pilotés lors du cycle de fonctionnement du moteur de manière à injecter du carburant, tel que de l'essence, dans les conduits d'admission en amont des soupapes d'admission, et qui est caractérisé en ce que chacun des injecteurs est piloté suivant le procédé tel que défini précédemment.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels:
- la figure 1 est une vue en coupe longitudinale d'un conduit d'admission comportant un injecteur de carburant d'un dispositif d'injection indirecte pour moteur à injection indirecte et allumage commandé;
- la figure 2 est un graphe représentant les pics d'hydrocarbures imbrûlés exprimés en particules par millions (ppm) lors de la coupure d'injection d'essence sur un extrait de cycle d'essai normalisé;
- la figure 3 représente l'évolution de la masse du film fluide présent sur la paroi d'un conduit d'admission en fonction de l'angle de rotation du vilebrequin du moteur;
- la figure 4 représente les levées des soupapes d'échappement et d'admission en fonction de l'angle de rotation du vilebrequin;
- la figure 5 représente la variation de phasage d'injection conforme à l'invention en fonction du temps de fonctionnement du moteur proportionnel au nombre de cycles de ce moteur;
- la figure 6 est un gaphe représentant l'enrichissement du moteur en fonction du temps de fonctionnement de celui-ci lors de la variation de phasage d'injection de la figure 5;
- la figure 7 est un graphe représentant le temps d'injection en microsecondes en fonction du temps de fonctionnement du moteur suivant la stratégie de commande d'injecteur conforme à l'invention; et
- la figure 8 représente l'évolution du phasage d'injection en fonction du temps de fonctionnement du moteur et conformément à la stratégie d'injection avant coupure d'injection de la figure 7.

La stratégie de l'invention permettant de diminuer la quantité d'hydrocarbures imbrûlés HC en début de coupure de l'invention est réalisée par deux actions simultanées comprenant une action sur le phasage d'injection et une action sur le temps d'injection.

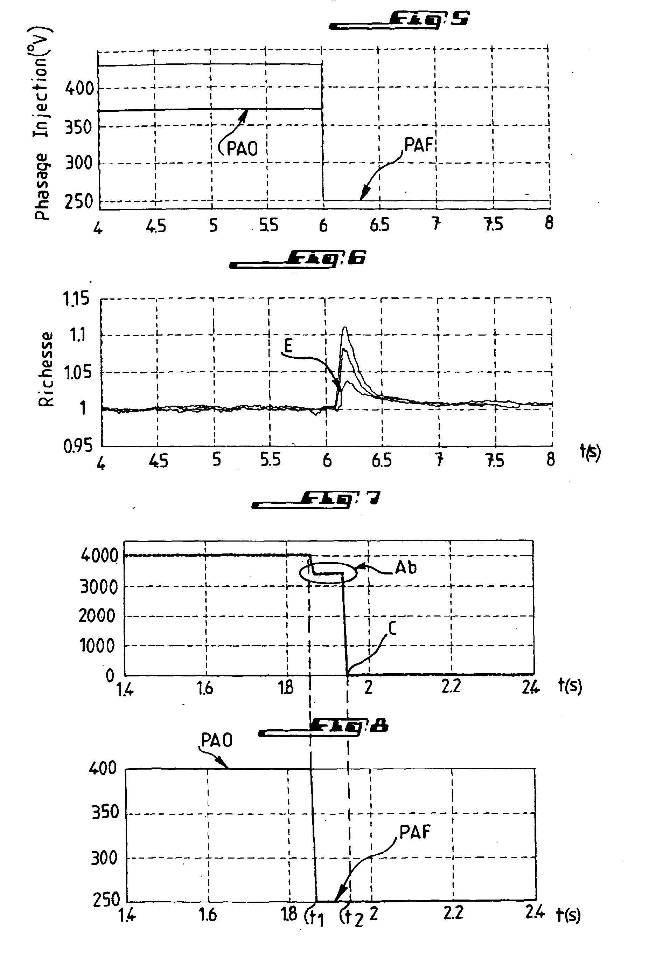

Comme représenté aux figures 5 à 8, la stratégie adoptée concernant l'action sur le phasage d'injection par rapport à la position angulaire du vilebrequin, consiste à réaliser un basculement de phasage d'injection en passant d'un phasage d'injection soupape d'admission ouverte comme indiqué en PAO à un phasage d'injection à soupape d'admission fermée comme indiqué en PAF avant la coupure de l'injection. Autrement dit, l'injecteur 1 est piloté pour décaler le phasage d'injection de carburant dans le conduit d'admission 3 au-delà de l'instant de fermeture de la soupape d'admission 4 avant coupure de l'injection. Un tel basculement créé un enrichissement E du moteur comme indiqué en figure 6, si l'on garde le même temps d'injection de carburant. Pour compenser l'enrichissement du moteur dû à la variation ou au changement de phasage d'injection, la deuxième action de stratégie consiste à diminuer simultanément à la première action, le temps d'injection comme représenté en figure 7 avant la coupure C de l'injection. Ainsi, les figures 7 et 8 considérées ensemble montrent que l'injecteur 1 est piloté par le calculateur électronique de contrôle du moteur pendant un temps d'injection de 4000 microsecondes lors du phasage PAO d'injection à soupape d'admission 4 ouverte puis, lors du phasage PAF d'injection à soupape d'admission fermée, le temps d'injection au moment de ce déphasage est abaissé comme indiqué en Ab avant la coupure d'injection C se produisant à soupape d'admission fermée. La baisse du temps d'injection pendant ce phasage prolongé d'injection a pour effet de diminuer la quantité de film fluide d'essence présent sur les parois du conduit d'admission 3 du fait que la quantité d'essence projetée sur ces parois dépend du débit injecté par l'injecteur 1. La période ou durée de temps entre l'instant t1 de déphasage d'injection et l'instant t2 de coupure d'injection est paramétrale en nombre de cycles du moteur.

La stratégie de commande de l'injecteur conforme à l'invention permet de diminuer non seulement les émissions d'hydrocarbures imbrûlés HC, mais également l'exotherme du catalyseur constaté généralement dans l'art antérieur et, par conséquent, de ralentir le vieillissement de celui-ci.

La stratégie de commande de l'invention ne nécessite aucune modification du moteur et/ou de ses composants, mais uniquement une modification du logiciel du calculateur électronique de commande du moteur. Ainsi, cette stratégie s'opère à faible coût.

## Revendications

1. Procédé de commande d'injection de carburant pour moteur à combustion interne à injection indirecte et allumage commandé comprenant au moins un cylindre (2), un injecteur (1) associé au conduit d'admission (3) du cylindre (2) et piloté lors du cycle de fonctionnement du moteur de manière à injecter du carburant, tel que de l'essence, dans le conduit d'admission (3) en amont de la soupape d'admission ouverte (4) du cylindre (2) avant de pénétrer dans la chambre de combustion du cylindre (2), **caractérisé en ce qu'**il consiste à piloter l'injecteur (1) pour décaler le phasage d'injection de carburant dans le conduit d'admission (3) au-delà de l'instant de fermeture de la soupape d'admission (4) avant coupure de l'injecteur (1) et simultanément diminuer le temps d'injection de carburant pendant ce phasage décalé d'injection jusqu'à la coupure de l'injection (1), afin de diminuer la quantité de film fluide de carburant présent sur les parois du conduit d'admission (3).

2. Procédé selon la revendication 1, **caractérisé en ce que** la période de décalage du phasage d'injection jusqu'à la coupure de l'injection (1) est paramétrable en nombre de cycles de fonctionnement du moteur.

3. Moteur à combustion interne à injection indirecte et allumage commandé comprenant plusieurs cylindres (2), des conduits d'admission (3) associés chacun à un cylindre (2) avec lequel les conduits d'admission (3) communiquent par l'intermédiaire d'une soupape d'admission (4) du cylindre (2) et des injecteurs (1) associés chacun à un conduit d'admission (3) et pilotés lors du cycle de fonctionnement du moteur de manière à injecter du carburant, tel que de l'essence, dans les conduits d'admission (3) en amont des soupapes d'admission (4), **caractérisé en ce que** chacun des injecteurs (1) est piloté suivant le procédé tel que défini en revendication 1 ou 2.

## Claims

1. Method for controlling fuel injection for an internal combustion engine with indirect injection and controlled ignition including at least one cylinder (2), an injector (1), that is associated with the inlet duct (3) of cylinder (2) and actuated during the engine operating cycle so as to inject fuel, such as petrol, into the inlet duct (3) upstream of the open inlet valve (4) of the cylinder (2) before it enters the combustion chamber of the cylinder (2), **characterized in that** it consists of controlling the injector (1) so as to delay the phase for injecting fuel into the inlet duct (3) beyond the time when the inlet valve (4) closes before the injector (1) is cut off, and simultaneously reducing the fuel injection time during this delayed injection phase until the injection (1) is cut off, in order to reduce the quantity of liquid fuel film present on the walls of the inlet duct (3).

2. Method as recited in claim 1, **characterized in that** the delay period of the injection phase until the injection (1) is cut off is adjustable according to the number of operating cycles of the engine.

3. Internal combustion engine with indirect injection and controlled ignition including multiple cylinders (2), inlet ducts (3), each of which is assigned to a cylinder (2), with which the ducts are connected via an inlet valve (4) of cylinder (2) and injectors (1), each of which is assigned to an inlet duct (3) and actuated during the operating cycle of the engine so as to inject fuel, such as petrol, into the inlet ducts (3) upstream of the inlet valves (4), **characterized in that** each of the injectors (1) is controlled according to the method as recited in claim 1 or 2.

## Patentansprüche

1. Steuerverfahren zum Einspritzen von Kraftstoff für einen Verbrennungsmotor mit indirekter Einspritzung und gesteuertem Zünden, der mindestens einen Zylinder (2), ein Einspritzventil (1) aufweist, das mit der Einlassleitung (3) des Zylinders (2) verbunden ist und beim Betriebszyklus des Motors derart gesteuert wird, dass der Kraftstoff, wie zum Beispiel Benzin, in die Einlassleitung (3) stromaufwärts des offenen Einlassventils (4) des Zylinders (2) vor dem Eindringen in die Brennkammer des Zylinders (2) eingespritzt wird, **dadurch gekennzeichnet, dass** es darin besteht, das Einspritzventil (1) zu steuern, um die Phaseneinteilung des Einspritzens von Kraftstoff in die Einlassleitung (3) über den Augenblick des Schließens des Einlassventils (4) vor dem Abstellen des Einspritzventils (1) hinaus zu steuern und gleichzeitig die Kraftstoffeinspritzzeit während dieser versetzten Einspritzphaseneinteilung bis zum Abstellen der Einspritzung (1) zu verringern, um die Menge an fluidem Kraftstofffilm, die auf den Wänden der Einlassleitung (3) vorhanden ist, zu verringern.

2. Verfahren nach Anspruch 1, **dadurch gekennzeichnet, dass** die Versatzperiode der Einspritzphaseneinteilung bis zum Abstellen der Einspritzung (1) in Anzahl Betriebszyklen des Motors parametrierbar ist.

3. Verbrennungsmotor mit indirekter Einspritzung und gesteuertem Zünden, der mehrere Zylinder (2), Einlassleitungen (3), die jeweils zu einem der Zylinder (2) gehören, mit dem die Einlassleitungen (3) über ein Einlassventil (4) des Zylinders (2) kommunizieren, und Einspritzventile (1) aufweist, die jeweils mit einer Einlassleitung (3) verbunden sind und beim Betriebszyklus des Motors derart gesteuert werden, dass sie Kraftstoff, wie zum Beispiel Benzin, in die Einlassleitungen (3) stromaufwärts der Einlassventile (4) einspritzen, **dadurch gekennzeichnet, dass** jedes der Einspritzventile (1) gemäß dem Verfahren nach Anspruch 1 oder 2 gesteuert ist.
